# EUROPÄISCHE PATENTANMELDUNG

(11) **EP 4 574 628 A1**
(43) Veröffentlichungstag der Anmeldung: **25.06.2025**
(21) Anmeldenummer: 24219160.9
(22) Anmeldetag: 11.12.2024
(51) Int. Cl.: B62D 12/00, E01C 19/26

(54) **VERFAHREN ZUR LENKSTEUERUNG EINER KNICKGELENKTEN BAUMASCHINE, INSBESONDERE EINER SELBSTFAHRENDEN BODENVERDICHTUNGSMASCHINE.**

(30) Priorität: 13.12.2023 DE 102023135043
(71) Anmelder: BOMAG GmbH, 56154 Boppard (DE)
(72) Erfinder: Beul, Eike, Boppard (DE); Laugwitz, Niels, Boppard (DE)
(74) Vertreter: Zimmermann & Partner Patentanwälte mbB

(57) **Zusammenfassung**

Die Erfindung betrifft ein Verfahren zur Lenksteuerung einer knickgelenkten Baumaschine, insbesondere einer selbstfahrende Bodenverdichtungsmaschine, insbesondere einen Walzenzug oder eine Tandemwalze, mithilfe einer Lenksteuereinheit sowie eine knickgelenkte Baumaschine, insbesondere eine selbstfahrende Bodenverdichtungsmaschine.

## Beschreibung

Die Erfindung betrifft ein Verfahren zur Lenksteuerung einer knickgelenkten Baumaschine, insbesondere einer selbstfahrenden Bodenverdichtungsmaschine, insbesondere eines Walzenzuges oder einer Tandemwalze, mithilfe einer Lenksteuereinheit. Ferner betrifft die Erfindung eine knickgelenkte Baumaschine, insbesondere eine selbstfahrende Bodenverdichtungsmaschine.

Knickgelenkte Baumaschinen sind bekannt und zeichnen sich dadurch aus, dass sie einen Vorderwagen und einen Hinterwagen aufweisen, die über eine Knickgelenkeinrichtung relativ zueinander lenkbar miteinander verbunden sind. Die Lenkachse erstreckt sich üblicherweise in Vertikalrichtung, kann gegenüber einer Vertikalachse aber auch geneigt ausgebildet sind. An dem Vorderwagen und dem Hinterwagen ist jeweils wenigstens eine Fahreinrichtung angeordnet, beispielsweise in Form von einem oder mehreren Rädern oder einer oder mehrerer Walzbandagen. Diese Fahreinrichtungen sind bei knickgelenkten Maschinen gegenüber dem sie lagernden Vorderwagen und Hinterwagen häufig nicht lenkbar, sondern allein um eine üblicherweise horizontal und quer zu einer Vorwärtsrichtung der Baumaschine verlaufende Drehachse drehbar. Lenkbewegungen derartiger Baumaschinen werden durch eine Verdrehung der Relativlage des Vorderwagens relativ zum Hinterwagen um die Lenkachse der Knickgelenkeinrichtung erreicht.

Die Knickgelenkeinrichtung kann ferner derart ausgeführt werden, dass der Vorderwagen gegenüber dem Hinterwagen um eine in Vorwärtsrichtung verlaufende Pendelachse pendelbar ist. Auf diese Weise können sich die wenigstens eine Fahreinrichtung des Vorderwagens und die wenigstens eine Fahreinrichtung des Hinterwagens relativ zueinander um die Pendelachse gegeneinander verdrehen, wodurch beispielsweise Unebenheiten des Bodens ausgeglichen werden können bzw. auch bei Bodenunebenheiten eine gleichmäßige Lastverteilung auf den Bodenuntergrund erfolgen kann. Die Pendelachse verläuft somit in einer im Wesentlichen horizontalen Ebene in Vorwärtsrichtung der geradeaus fahrenden Baumaschine.

Schließlich ist es ebenfalls bekannt, den Vorderwagen und den Hinterwagen mithilfe einer Hundeganggelenkeinrichtung derart miteinander zu verbinden, dass die Fahrspur der wenigstens einen Fahreinrichtung des Vorderwagens gegenüber der Fahrspur der wenigstens einen Fahreinrichtung des Hinterwagens horizontal und schräg zur Fahrrichtung bzw. translatorisch in der Horizontalebene versetzbar ist. In diesem sogenannten Hundegang kann beispielsweise für den Fall, dass es sich bei den Fahreinrichtungen um Walzbandagen handelt, die gesamte Arbeitsbreite der Maschine in Vorwärtsrichtung erhöht werden, wobei nur ein innerer Teil der Gesamtfahrspur von beiden Walzbandagen überfahren wird und ein diesen inneren Teil beidseitig zu den Außenseiten umgebender Randbereich vorhanden ist, in dem der Boden jeweils nur von einer Walzbandage überfahren wird. Die Hundeganggelenkeinrichtung kann derart ausgebildet sein, dass die Hundegangverstellung entlang einer linearen Verstellachse oder entlang einer Kurve bzw. Kurvenbahn erfolgt. Eine derartige Kopplungseinrichtung für eine Tandemwalze ist beispielsweise aus der EP 2 423 076 B1 der Anmelderin bekannt. Weitere selbstfahrende Baumaschinen mit einer Knickgelenkeinrichtung und einer Hundeganggelenkeinrichtung sind ferner in der DE 8209885 U1 sowie der US 6,345,832 B 1 beschrieben.

Zum Antrieb einer Lenkverstellung über die Knickgelenkeinrichtung und einer translatorischen Verstellung über die Hundeganggelenkeinrichtung kann jeweils ein Verstellantrieb, beispielsweise in Form eines oder mehrerer Hydraulikzylinder oder sonstiger Aktoren, vorgesehen sein.

Die Begriffe "Verstellachse", "Knickgelenkachse" und "Pendelgelenkachse" bezeichnen Bewegungsachsen und nicht notwendigerweise Bauteilachsen.

Auch wenn sich selbstfahrende Baumaschinen mit einem Vorderwagen mit einer ersten Fahreinrichtung, einem Hinterwagen mit einer zweiten Fahreinrichtung, einer den Vorderwagen mit dem Hinterwagen verbindenden Knick-Pendelgelenkeinrichtung mit einer Knickgelenklenkachse und einer Pendelgelenkpendelachse und mit einer Hundeganggelenkeinrichtung zur translatorischen Verstellung des Vorderwagens relativ zum Hinterwagen bereits bestens bewährt haben, besteht noch Optimierungspotential. So kann beispielsweise die Kippstabilität derartiger Baumaschinen insbesondere bei vergleichsweise hohen Fahrgeschwindigkeiten und großen Lenkwinkeln herausfordernd sein. Ferner erfolgt mit einer Erhöhung des Lenkeinschlages teilweise eine Verschiebung der Lastverteilung an der wenigstens einen Fahreinrichtung des Vorderwagens und/oder des Hinterwagens. Dies kann unter Umständen insbesondere dann nachteilig sein, wenn die Arbeitsfunktion der Baumaschine in einer Lastübertragung über die jeweils wenigstens eine Fahreinrichtung in den Bodenuntergrund besteht, wie es beispielsweise bei Bodenverdichtungsmaschinen der Fall ist, die eine oder mehrere Walzbandagen umfassen. In solchen Fällen können bei Kurvenfahrten insbesondere bei erhöhten Lenkeinschlägen aufgrund der dann nicht mehr über die Breite der jeweiligen Walzbandage gegebenen gleichmäßigen Lastverteilung Rillen in die Bodenoberfläche des Bodenuntergrundes eingebracht werden, was beispielsweise nicht unbeträchtliche Nachbearbeitungen nach sich ziehen kann.

Die Aufgabe der Erfindung besteht daher darin, ausgehend von den im Stand der Technik bekannten gattungsgemäßen selbstfahrenden Baumaschinen eine Möglichkeit anzugeben, das Fahrverhalten derartiger Baumaschinen weiter zu verbessern.

Die Lösung der Aufgabe gelingt mit einem Verfahren zur Lenksteuerung einer knickgelenkten Baumaschine, insbesondere einer selbstfahrende Bodenverdichtungsmaschine, insbesondere Walzenzug oder Tandemwalze, mithilfe einer Lenksteuereinheit sowie mit einer knickgelenkten Baumaschine gemäß den unabhängigen Ansprüchen. Bevorzugte Weiterbildungen sind in den abhängigen Ansprüchen angegeben.

In einem ersten Aspekt betrifft die Erfindung somit ein Verfahren zur Lenksteuerung einer knickgelenkten Baumaschine. Eine zur Umsetzung des erfindungsgemäßen Verfahrens vorgesehene Baumaschine umfasst einen Vorderwagen mit wenigstens einer ersten Fahreinrichtung und einen Hinterwagen mit wenigstens einer zweiten Fahreinrichtung. Der Vorderwagen umfasst einen Vorderwagenmaschinenrahmen und der Hinterwagen einen Hinterwagenmaschinenrahmen, die zusammen mit der nachstehend noch näher beschriebenen, diese beiden Maschinenrahmenteile miteinander verbindenden Gelenkeinrichtung den Gesamtmaschinenrahmen und damit die wesentliche Tragstruktur der Baumaschine bilden. Die Baumaschine umfasst ferner eine Antriebseinrichtung, wie beispielsweise einen Verbrennungs- und/oder Elektromotor, mit der die für den Fahr- und Arbeitsbetrieb erforderliche Antriebsenergie zur Verfügung gestellt wird. Die Baumaschine kann ferner einen Fahrstand, insbesondere in Form einer Fahrerkabine oder ähnlichem, aufweisen.

Die mechanische Verbindung des Vorderwagens und der Hinterwagens erfolgt über eine den Vorderwagen mit dem Hinterwagen verbindende Knick-Pendelgelenkeinrichtung. Hierbei handelt es sich somit um eine, üblicherweise wenigstens teilweise mechanisch wirkende, Funktionsgesamtheit, über die eine Verbindung der beiden Rahmenteile derart möglich ist, dass sich die beiden Rahmenteile um eine Knickgelenklenkachse und eine Pendelgelenkpendelachse relativ zueinander bewegen können

Die Knick-Pendelgelenkeinrichtung kann insbesondere derart ausgebildet sein, dass die Pendelbewegung des Vorderwagens relativ zum Hinterwagen um die Pendelgelenkpendelachse zumindest innerhalb eines definierten Pendelbereiches frei ist. Allerdings können ein oder mehrere Pendelanschläge vorgesehen sein, die den Bereich, innerhalb dessen der Vorderwagen relativ zum Hinterwagen frei um die Pendelgelenkpendelachse pendeln kann, begrenzen. Die Pendelgelenkpendelachse verläuft üblicherweise in Vorwärtsrichtung der Baumaschine erstreckt, insbesondere in einer horizontalen Ebene liegend, so dass der Vorderwagen und der Hinterwagen relativ zueinander Bodenunebenheiten in zumindest begrenztem Umfang ausgleichen können.

Die Knickgelenklenkachse der Knick-Pendelgelenkeinrichtung verläuft dagegen zumindest im Wesentlichen in Vertikalrichtung erstreckt, insbesondere in einer vertikalen Ebene liegend, ganz besonders senkrecht zu der Pendelgelenkpendelachse. Die Knickgelenklenkachse bezeichnet diejenige Achse, um die sich der Vorderwagen relativ zum Hinterwagen dreht, wenn eine Lenkbewegung allein über die Knick-Pendelgelenkeinrichtung erfolgt.

Im Fahrstand der Baumaschine kann eine Betätigungseinrichtung, beispielsweise ein Lenkrad und/oder ein Bedienlenkhebel oder ähnliches, vorgesehen sein, über dessen Betätigung ein Bediener eine Lenkeingabe vornehmen kann. Zum Antrieb einer Lenkbewegung um die Knickgelenklenkachse zur Umsetzung dieser Lenkeingabe umfasst die Knick-Pendelgelenkeinrichtung einen von einer Lenksteuereinheit gesteuerten Lenkantrieb, beispielsweise in Form eines oder mehrerer hydraulischer und/oder elektrischer Aktoren, wie beispielsweise einem oder mehreren Hydraulikzylindern.

Die Baumaschine umfasst ferner eine Hundeganggelenkeinrichtung. Anders als die Knick-Pendelgelenkeinrichtung ist die Hundeganggelenkeinrichtung derart ausgebildet, dass der Vorderwagen relativ zum Hinterwagen, insbesondere in einer virtuellen horizontalen Bezugsebene, translatorisch verstellbar ist. Die translatorische Verstellung ist dadurch definiert, dass der Vorderwagen gegenüber dem Hinterwagen relativ zueinander vollständig dieselbe Verschiebung erfährt (oder umgekehrt). Der Vorderwagen und der Hinterwagen werden somit anders als bei der Lenkverstellung durch die Hundegangverstellung zueinander parallelverschoben. Dies kann entlang einer linear verlaufenden Bewegungsbahn oder auch entlang einer Kurve und/oder gekurvten Bewegungsbahn erfolgen. Mithilfe der Hundeganggelenkeinrichtung kann somit insbesondere die Fahrspur der wenigstens einen am Vorderwagen angeordneten Fahreinrichtung gegenüber der Spur der wenigstens einen am Hinterwagen angeordneten Fahreinrichtung variiert werden. Dies hat sich insbesondere bei Tandemwalzen bewährt, da auf diese Weise die Gesamtarbeitsbreite der Baumaschine in Vorwärtsrichtung gesehen über die Breite einer einzelnen Bandage hinaus vergrößert werden kann. Auch für die Hundeganggelenkeinrichtung kann eine Betätigungseinrichtung, beispielsweise ein geeigneter Bedienhebel oder ähnliches, im Fahrstand der Baumaschine vorgesehen sein, über dessen Betätigung der Bediener eine Hundegangverstellung vornehmen kann. Zum Antrieb der Hundegangverstellung bzw. der translatorischen Verstellbewegung des Vorderwagens relativ zum Hinterwagen und damit zur Umsetzung einer Verstelleingabe des Bedieners umfasst die Hundeganggelenkeinrichtung einen von der Lenksteuereinheit gesteuerten Verstellantrieb, beispielsweise ebenfalls in Form von einem oder mehreren hydraulischen und/oder elektrischen Aktoren, wie beispielsweise einem oder mehreren Hydraulikzylindern.

Das nachstehend noch näher beschriebene erfindungsgemäße Verfahren eignet sich besonders für eine Baumaschine vom Typ selbstfahrende Bodenverdichtungsmaschine. Selbstfahrende Bodenverdichtungsmaschinen können insbesondere Walzenzüge oder Tandemwalzen sein. Walzenzüge zeichnen sich dadurch aus, dass sie am Vorderwagen eine, insbesondere eine einzige, Walzbandage als Fahreinrichtung aufweisen. Hierbei handelt es sich üblicherweise um eine im Wesentlichen hohlzylinderförmige Einrichtung, deren Außenmantelfläche entweder glatt ist oder mit weiteren Wirkmitteln, beispielsweise einem Schaffußbesatz, versehen sein kann. Am Hinterwagen ist die Fahreinrichtung dagegen üblicherweise als ein Paar von Antriebsrädern ausgebildet. Tandemwalzen weisen dagegen üblicherweise sowohl am Vorderwagen als auch am Hinterwagen jeweils wenigstens eine und insbesondere ausschließlich eine einzige Walzbandage auf. Die Walzbandage kann eine oder mehrere Schwingungserregungseinrichtungen umfassen, beispielsweise sogenannte Unwuchterreger, mit deren Hilfe die Walzbandage mit zusätzlichen Schwingungen zur Durchführung eines dynamischen Verdichtungsprozesses beaufschlagt werden kann. Anstelle einer Walzbandage kann auch ein Gummiradsatz, üblicherweise umfassend wenigstens drei oder mehr koaxial zueinander angeordnete Einzelräder, vorgesehen sein. Sind sowohl am Vorderwagen als auch am Hinterwagen ausschließlich Gummiradsätze angeordnet, wird die Tandemwalze auch als Gummiradwalze bezeichnet. Mischformen werden als Kombiwalzen bezeichnet.

Schließlich ist erfindungsgemäß eine Lenksteuereinheit vorhanden, die die Verstellung der Knick-Pendelgelenkeinrichtung und der Hundeganggelenkeinrichtung in der nachstehend noch näher beschriebenen Weise steuert und/oder regelt. Die Lenksteuereinheit kann insbesondere als Computereinrichtung ausgebildet sein und ein geeignetes Computerprogramm zur Steuerung des nachstehend noch näher beschriebenen Verfahrens aufweisen. Sie kann als Eingangsgrößen die Lenkvorgaben des Bedieners erhalten und sie kann zur Steuerung der Knick-Pendelgelenkeinrichtung und der Hundeganggelenkeinrichtung entsprechende Steuervorgaben an den Lenkantrieb und den Verstellantrieb übermitteln. Unabhängig davon ist es vorzugsweise möglich, auch nur eine Verstellung der Hundeganggelenkeinrichtung vorzunehmen. Es können ferner ein oder mehrere Sensoren vorhanden sein, die die aktuelle Lenkposition, insbesondere den Lenkwinkel, sowie die aktuelle Hundegangverstellung zwischen dem Vorderwagen und dem Hinterwagen direkt oder indirekt erfassen und/oder ermitteln und an die Lenksteuereinheit übermitteln.

Wesentlich für das erfindungsgemäße Verfahren ist nun, dass mithilfe einer Lenksteuereinheit in einem Schritt a) ein Verstellen der Relativlage des Vorderwagens relativ zum Hinterwagen um die Knickgelenkachse erfolgt. Hierbei handelt es sich somit um eine Lenkverstellung, um die knickgelenkte Baumaschine beispielsweise aus einer Geradeausfahrt heraus in eine Links- oder Rechtskurve zu lenken. Hierzu ergänzend ist es nun vorgesehen, dass die Lenksteuereinheit in einem Schritt b) ein Verstellen der Relativlage des Vorderwagens relativ zum Hinterwagen über die Hundeganggelenkeinrichtung steuert. Die Umsetzung einer Lenkvorgabe eines Benutzers umfasst somit ergänzend zu einer Betätigung der Knick-Pendelgelenkeinrichtung ergänzend eine Betätigung der Hundeganggelenkeinrichtung. Auf dieses Weise erstreckt sich die Umsetzung einer Lenkvorgabe des Benutzers somit über eine reine Winkelverstellung des Vorderwagens relativ zum Hinterwagen um die Knickgelenkachse hinaus auch auf eine translatorische Verstellung des Vorderwagens relativ zum Hinterwagen durch die Hundeganggelenkeinrichtung. Ganz konkret kann dies insbesondere bedeuten, dass die Umsetzung einer Lenkvorgabe des Bedieners eine durch die Lenksteuereinheit gesteuerte Verstellung sowohl des Lenkantriebs der Knick-Pendelgelenkeinrichtung als auch des Verstellantriebs der Hundeganggelenkeinrichtung aufweist. Mithilfe dieser Art der Lenkung durch eine kombinierte Verstellung sowohl der Lenkposition als auch der Hundegangposition des Vorderwagens relativ zum Hinterwagen kann insbesondere auch die Relativlage der Schwerpunkte des Vorderwagens und des Hinterwagens relativ zueinander und relativ zur Gesamtheit aus Knick-Pendelgelenkeinrichtung und Hundeganggelenkeinrichtung über den Lenkvorgang hinweg optimiert und auf diese Weise das Fahrverhalten der Baumaschine erheblich verbessert werden.

Grundsätzlich ist es möglich, dass die Schritte a) und b) von der Lenksteuereinheit zur Umsetzung einer Lenkvorgabe des Bedieners nacheinander durchgeführt und gesteuert werden, wobei die Reihenfolge der Schritte a) und b) hierbei variieren kann. Wesentlich ist, dass beide Schritte zur Umsetzung einer Lenkvorgabe des Bedieners von der Lenksteuereinheit gesteuert werden. Bevorzugt ist es jedoch, wenn die Schritte a) und b) während eines Lenkvorgangs wenigstens teilweise zueinander überlagert erfolgen. In diesem Fall erfolgt die translatorische Verstellung über die Hundeganggelenkeinrichtung somit wenigstens teilweise gleichzeitig zur rotatorischen Lenkbewegung um die Lenkachse. Auf diese Weise wird eine insgesamt vergleichsweise gleichmäßige Verstellbewegung der beiden Rahmenteile zueinander erhalten.

Es ist möglich, dass die Schritte a) und b) bei der Umsetzung jeder Art von Lenkbewegung immer von der Lenksteuereinheit durchlaufen werden. Es ist allerdings bevorzugt, wenn der Schritt b) ergänzend zum Schritt a) erst beim Überschreiten eines definierten Lenkwinkels erfolgt. Ergänzend oder alternativ kann es auch vorgesehen sein, dass das Ausmaß einer Verstellung im Schritt b) abhängig von einer bestehenden Hundegangverstellung bzw. eines bestehenden Fahrspurversatzes erfolgt. Der bestehende Fahrspurversatz bezeichnet denjenigen Versatz der wenigstens einen Fahreinrichtung am Vorderwagen gegenüber der wenigstens einen Fahreinrichtung am Hinterwagen in Richtung der Rotationsachse der Fahreinrichtungen in einer virtuellen horizontalen Bezugsebene gegenüber einer sogenannten Nulllage, in der der Vorderwagen und der Hinterwagen eine Relativlage zueinander haben, in der eine Hundegangverstellung sowohl zur rechten als auch zu linken Seite maximal in gleichem Umfang möglich wäre. Die Nulllage bezeichnet somit eine Mittellage zwischen den beiden Hundegangverstellungen des Vorderwagens relativ zum Hinterwagen zu den einander gegenüberliegenden Seiten.

Die Richtung der im Rahmen eines Lenkvorgangs durch die Lenksteuereinheit in eine Lenkrichtung gesteuerten Hundegangverstellung kann ebenfalls variieren. Grundsätzlich ist es bevorzugt, wenn die Hundegangverstellung bzw. die Richtung der Hundegangverstellung in Abhängigkeit von der vom Bediener vorgegebenen Lenkrichtung erfolgt. Hierzu kann es beispielsweise vorteilhaft sein, wenn die Hundegangverstellung im Schritt b) in Richtung zum Kurveninneren eines im Schritt a) erfolgten Lenkeinschlags erfolgt. Dies kann mit einer vorteilhaften Schwerpunktverschiebung einhergehen, wie nachstehend noch näher beschrieben. Ergänzend oder alternativ ist es dadurch auch möglich, dass die Baumaschine insgesamt kleinere Kurvenradien fahren kann. Es ist allerdings auch möglich, dass die Hundegangverstellung im Schritt b) in Richtung zum Kurvenäußeren erfolgt. Auch dadurch kann im Einzelfall, insbesondere abhängig von der aktuellen Geländesituation, ein optimiertes Fahrverhalten der Baumaschine erhalten werden.

Die Kriterien, nach denen insbesondere das Ausmaß der im Schritt b) erfolgenden Hundegangverstellung erfolgt, können variieren. Beispielsweise kann das Ausmaß der im Schritt b) erfolgenden Hundegangverstellung vom Ausmaß des Lenkeinschlages bzw. vom Lenkwinkel und insbesondere dessen Betrag abhängen. Insbesondere kann es vorgesehen sein, dass das Ausmaß der Hundegangverstellung mit der Größe des Lenkwinkels steigt und umgekehrt. Je größer somit der Lenkwinkel ist, desto größer ist auch der Hundegangversatz. Ergänzend oder alternativ hat es sich als vorteilhaft erwiesen, wenn dies unter Berücksichtigung einer Schwerpunktlage des Vorderwagens und/oder des Hinterwagens erfolgt, insbesondere relativ zu der Knick-Pendelgelenkeinrichtung bzw. insbesondere relativ zu einer Stützachse der Knick-Pendelgelenkeinrichtung. Relevant sind in diesem Zusammenhang insbesondere die Massenmittelpunkte des Vorderwagens und/oder des Hinterwagens und deren Lage in einer virtuellen horizontalen Referenzebene relativ zueinander.

Ferner kann insbesondere in diesem Zusammenhang eine sich durch die Knick-Pendelgelenkeinrichtung erstreckende Stützachse besonders relevant sein. Die Stützachse bezeichnet eine virtuelle Drehachse um die sich der jeweilige Rahmenteil (Vorder- / Hinterrahmen) momentenfrei drehen kann. Die Stützachse kann, abhängig vom Lenkeinschlag, koaxial oder parallel zur Pendelachse verlaufen. Die Stützachse verläuft funktional somit bei einer Projektion der Baumaschine in eine horizontale Referenzebene mit ihrer Längserstreckung in dieser Referenzebene rechtwinklig zur Rotationsachse der wenigstens einen Fahreinrichtung. Eine vorteilhafte Weiterbildung der Erfindung sieht vor, dass der Schritt b) derart durchgeführt wird, dass bei einer Projektion der knickgelenkten Baumaschine in eine horizontale Bezugsebene der Schwerpunkt des Vorderrahmens oder des Hinterwagens in dieser Bezugsebene an eine Stützachse der Knick-Pendelgelenkeinrichtung angenähert oder auf diese verschoben wird. Diese Ausführungsform hat den Vorteil, dass insbesondere für den Fall, dass es sich bei den Fahreinrichtungen um eine oder mehrere Walzbandagen handelt und dass die Knick-Pendelgelenkeinrichtung wenigstens innerhalb eines definierten Pendelbereiches frei pendelbar ist, die Gewichtskraftlastverteilung entlang der Aufstandslinie der jeweiligen Walzbandagen auch bei Kurvenfahrt zumindest vergleichsweise konstant gehalten wird und auf diese Weise beispielsweise bei Kurvenfahrten der in diesem Fall insbesondere als Tandemwalze ausgebildeten Baumaschine trotz freier Pendelbarkeit um die Pendelachse praktisch keine Rillen oder ähnliche Oberflächenunregelmäßigkeiten in den Bodenuntergrund eingearbeitet werden.

Ergänzend oder alternativ kann es für das erfindungsgemäße Verfahren auch vorgesehen sein, dass ein Erfassen einer aktuellen Querneigung der Baumaschine, insbesondere des Vorderwagens und/oder des Hinterwagens, erfolgt. Die Querneigung bezeichnet vorliegend insbesondere die Neigung der Baumaschine gegenüber der Schwerkraftrichtung und nicht gegenüber der Bodenoberfläche, ganz konkret die Neigung der Baumaschine um ihre Rollachse, d.h. die Verlagerung der Baumaschine ausgehend von einer horizontalen Normallage in Bezug auf eine in Vertikalrichtung und quer zur Längsachse der Baumaschine verlaufende Ebene. Bei knickgelenkten Baumaschinen kann das Kipprisiko bei Kurvenfahrt insbesondere zur Kurvenaußenseite aufgrund der vorstehend bereits beschriebenen Schwerpunktverschiebung erheblich ansteigen. Das erfindungsgemäße Verfahren, wonach eine Lenkbewegung mit einer Hundegangverstellung überlagert werden kann, kann nun genutzt werden, die Kippstabilität der Baumaschine speziell in diesen Einsatzsituationen zu verbessern. Hierzu kann es vorgesehen sein, dass der Schritt b), insbesondere das Ausmaß der Verstellung der Relativlage des Vorderwagens relativ zum Hinterwagen über die Hundeganggelenkeinrichtung, in Abhängigkeit von der aktuellen Querneigung ergänzend zum Schritt a) erfolgt. Grundsätzlich kann es in dieser Situation vorgesehen sein, dass auch hier die Hundegangverstellung per se in Richtung zum Kurveninneren erfolgt. Bevorzugt ist es jedoch, wenn die Hundegangverstellung in diesem Fall in Bezug auf die aktuelle Querneigung des Vorder- und/oder Hinterwagens hangaufwärts erfolgt.

Es ist ergänzend möglich, die Lenksteuereinheit derart auszubilden, dass sie die vorstehend beschriebene Kombination der Schritte a) und b) auch gleichzeitig in Abhängigkeit von der aktuellen Querneigung des Vorder- und/oder Hinterrahmens und der Lenkrichtung und/oder dem Lenkradius durchführt. In diesem Fall ist es jedoch bevorzugt, wenn die Berücksichtigung der einzelnen Größen zueinander priorisiert erfolgt, die Einflussgrößen somit nicht stets zu gleichen Teilen von der Lenksteuereinheit berücksichtigt werden. Insbesondere ist es vorteilhaft, wenn die Querneigung als Einflussgröße für das Ausmaß der Hundegangverstellung gegenüber der Lenkrichtung und/oder dem Lenkradius priorisiert berücksichtigt wird, zumindest oberhalb eines definierten Querneigungsgrenzwertes, um sicherzustellen, dass die mithilfe der querneigungsabhängigen Hundegangverstellung erreichbare Kippstabilisierung stets Vorrang hat.

Eine weitere vorteilhafte Weiterbildung der Erfindung sieht vor, dass ein Erfassen einer aktuellen Fahrgeschwindigkeit der Baumaschine erfolgt, und dass der Schritt b), insbesondere das Ausmaß der Verstellung der Relativlage des Vorderwagens relativ zum Hinterwagen über die Hundeganggelenkeinrichtung, in Abhängigkeit von der aktuellen Fahrgeschwindigkeit ergänzend zum Schritt a) erfolgt. So kann es insbesondere vorgesehen sein, dass das Ausmaß der Hundegangverstellung bei gleichem Lenkwinkel bei gegenüber einem Fahrgeschwindigkeitsreferenzwert höheren Fahrgeschwindigkeiten größer ist und umgekehrt. Die Lenksteuereinheit kann weiter ergänzend derart ausgebildet sein, dass sie die Steuerung des Ausmaßes der Hundegangverstellung ergänzend zur Fahrgeschwindigkeit auch in Abhängigkeit der vorstehend genannten Größen "Lenkwinkel", "Querneigung" und/oder "Lenkrichtung" steuert.

Es ist möglich, dass die selbstfahrende Baumaschine eine zwischen einer Bodenbearbeitungsposition und einer Stauposition verstellbare Bodenbearbeitungseinrichtung umfasst. Derartige Bodenbearbeitungseinrichtungen sind Einrichtungen, die in irgendeiner Form den Bodenuntergrund mit einem oder mehreren Funktionen beeinflussen. Eine solche Bodenbearbeitungseinrichtung kann insbesondere ein Kantenschneidgerät sein. Ein solches Kantenschneidgerät dient dazu, den Rand einer Asphaltmatte zu schneiden und/oder in Form zu pressen. Dazu kann es vorgesehen sein, dass das Kantenschneidgerät eine Schneid- und/oder Andrückrolle aufweist, die in die Asphaltmatte eingedrückt und/oder an die Asphaltmatte angedrückt werden kann. Diese Schneid- und/oder Andrückrolle kann mit ihrem in Vertikalrichtung unteren Scheitelpunkt unterhalb des in Vertikalrichtung unteren Scheitelpunktes der jeweiligen Fahreinrichtung liegen. Derartige Kantenschneidgeräte werden daher auch nur dann genutzt, wenn die Baumaschine in einer geeigneten Position beispielsweise am Rand der Asphaltmatte entlangfährt. Befindet sich die Bodenbearbeitungsmaschine somit im Kontakt mit dem Bodenuntergrund, befindet sie sich in der Bodenbearbeitungsposition. Aus dieser Position heraus ist sie, manuell und/oder motorisch angetrieben, in die Stauposition verstellbar, in der sie nicht im Bodeneingriff oder Bodenkontakt ist. Eine Hundegangverstellung bei in Bodenbearbeitungsposition befindlicher Bodenbearbeitungseinrichtung kann nachteilig sein, so dass es auch vorteilhaft ist, wenn die Lenksteuereinheit derart ausgebildet ist, dass sie ergänzend zum Schritt a) den Schritt b) abhängig von der aktuellen Position des Bodenbearbeitungsgerätes aktiviert und/oder deaktiviert. Insbesondere kann sie derart ausgebildet sein, dass sie eine Durchführung des Schrittes b) ergänzend zum Schritt a) dann ausschließt, wenn und solange die Bodenbearbeitungseinrichtung in der Bodenbearbeitungsposition ist. Dazu kann es vorgesehen sein, dass ein oder mehrere Sensoren vorhanden sind, die erfassen, ob die Bodenbearbeitungseinrichtung sich gerade in der Stauposition und/oder in der Bodenbearbeitungsposition befindet.

Grundsätzlich kann es vorgesehen sein, dass der Bediener bei der Bedienung der Baumaschine zwischen einem konventionellen Lenkverhalten bzw. einer konventionellen Lenksteuerung der Baumaschine und der vorstehend beschriebenen erfindungsgemäßen Lenksteuerung wählen kann. Hierzu kann es vorgesehen sein, dass das erfindungsgemäße Verfahren ein Aktivieren und/oder Deaktivieren eines konventionellen Lenkmodus und ein Deaktivieren und/oder Aktivieren eines erfindungsgemäßen Lenkmodus mit Hundegangverstellung umfasst. Die Baumaschine kann dazu ein oder mehrere geeignete Bedienelemente umfassen, über die der Bediener eine entsprechende Lenkmodusauswahl treffen kann.

Das erfindungsgemäße Verfahren kann auch eine Vorschlagsfunktion umfassen, die das Ausgeben einer Signalisierung an den Bediener der Baumaschine vorsieht, wenn eine ergänzende Verstellung gemäß Schritt b), beispielsweise aufgrund einer aktuellen Schräglage der Baumaschine, vorteilhaft wäre. Das Ausgeben der Signalisierung kann beispielsweise mithilfe einer Anzeigeeinrichtung, beispielsweise durch eine Einblendung in einer Bedienanzeige, erfolgen.

Es kann weiter ergänzend oder alternativ vorgesehen sein, dass bei einer während des Schrittes a) erfolgenden Hundegangverstellung gemäß Schritt b) das Anzeigen eines entsprechenden Eingriffes bei der Umsetzung der Lenkvorgabe durch den Bediener erfolgt. Auf diese Weise wird der Bediener der Baumaschine über die erfolgende Hundegangverstellung während eines Lenkvorgangs informiert und kann dann beispielsweise entscheiden, ob eine zusätzliche Hundegangverstellung gemäß Schritt b) erfolgen soll oder nicht.

Die Lenkvorgaben können durch einen Bediener vorgenommen werden. Das erfindungsgemäße Verfahren erstreckt sich allerdings auch auf autonom fahrende Baumaschinen, bei denen die Lenkvorgaben beispielsweise durch eine Computereinrichtung vorgegeben werden.

Ein weiterer Aspekt der Erfindung betrifft eine knickgelenkte Baumaschine, insbesondere eine selbstfahrende Bodenverdichtungsmaschine. Die erfindungsgemäße Baumaschine umfasst einen Vorderwagen mit wenigstens einer und insbesondere ausschließlich einer ersten Fahreinrichtung, einen Hinterwagen mit wenigstens einer zweiten und insbesondere ausschließlich einer zweiten Fahreinrichtung, eine den Vorderwagen mit dem Hinterwagen verbindende Knick-Pendelgelenkeinrichtung mit einer Knickgelenklenkachse und mit einer Pendelgelenkachse, wobei die Knick-Pendelgelenkeinrichtung einen Lenkantrieb zum Antrieb einer Lenkbewegung um die Knickgelenkachse aufweist. Die Baumaschine umfasst ferner eine Hundeganggelenkeinrichtung zur translatorischen Verstellung des Vorderwagens relativ zum Hinterwagen, insbesondere innerhalb einer virtuellen horizontalen Bezugsebene, wobei die Hundegelenkeinrichtung einen Verstellantrieb zum Antrieb einer translatorischen Verstellbewegung des Vorderwagens relativ zum Hinterwagen aufweist. Teil der erfindungsgemäßen Baumaschine ist schließlich auch eine Lenksteuereinheit. Zu weiteren Einzelheiten der erfindungsgemäßen knickgelenkten Baumaschine wir auf die vorhergehenden, insbesondere vorrichtungsbezogenen, Merkmale Bezug genommen. Wesentlich für die Erfindung ist nun, dass die Lenksteuereinheit zur Durchführung des erfindungsgemäßen Verfahrens ausgebildet ist.

Die erfindungsgemäße Baumaschine weist vorzugsweise einen Lenkwinkelsensor zur Erfassung einer Lenkwinkelvorgabe und/oder eines Ist-Lenkwinkels zwischen dem Vorderwagen und dem Hinterwagen auf. Ergänzend oder alternativ kann die Baumaschine einen Querneigungssensor zur Erfassung einer Querneigung des Vorderwagens und/oder des Hinterwagens und/oder einen Fahrgeschwindigkeitssensor zur Erfassung einer Fahrgeschwindigkeitsvorgabe und/oder einer Ist-Fahrgeschwindigkeit, der Baumaschine aufweisen. Die mit einem oder mehreren der vorstehend genannten Sensoren gewonnenen Messwerte können an die Lenksteuereinheit übertragen werden. Aus diesem Grund kann es vorgesehen sein, dass die Lenksteuereinheit in kabelgebundener und/oder kabelloser Signalübertragungsverbindung mit wenigstens einem dieser Sensoren steht und derart ausgebildet ist, dass der Schritt b) in Abhängigkeit von wenigstens einer der von dem wenigstens einen Sensor übermittelten Messwerte, insbesondere in Abhängigkeit der von dem Lenkwinkelsensor ermittelten Messwerte, erfolgt.

Die Erfindung wird nachstehend anhand der in den Figuren gezeigten Ausführungsbeispiele näher erläutert. Es zeigen schematisch:
- Fig. 1: eine knickgelenkte Baumaschine vom Typ Tandemwalze;
- Fig. 2: eine knickgelenkte Baumaschine vom Typ Walzenzug;
- Fig. 3: eine perspektivische Ansicht auf eine einen Vorderwagen mit einem Hinterwagen verbindende Knick-Pendelgelenkeinrichtung und eine Hundeganggel enkeinri chtung;
- Fig. 4A: eine Draufsicht auf eine Baumaschine in Geradeausfahrstellung;
- Fig. 4B: eine Ausschnittsvergrößerung des Verbindungsbereiches zwischen dem Vorderwagen und dem Hinterwagen der knickgelenkten Baumaschine aus Fig. 4A;
- Fig. 5A: eine Draufsicht auf die Baumaschine aus Fig. 4A in einer Rechtskurve;
- Fig. 5B: eine Ausschnittsvergrößerung des Verbindungsbereiches zwischen dem Vorderwagen und dem Hinterwagen der knickgelenkten Baumaschine aus Fig. 5A;
- Fig. 6A: eine Draufsicht auf die Baumaschine aus Fig. 5A mit zusätzlicher Hundegangverstellung;
- Fig. 6B: eine Ausschnittsvergrößerung des Verbindungsbereiches zwischen dem Vorderwagen und dem Hinterwagen der knickgelenkten Baumaschine aus Fig. 6A;
- Fig. 7: eine Überlagerung der Positionen aus Fig. 5A und 6A;
- Fig. 8: eine Überlagerung der Positionen aus Fig. 5B und 6B;
- Fig. 9: eine Draufsicht auf eine Baumaschine mit unter anderem Einzelheiten zu einem Sensorsystem;
- Fig. 10: ein Graph zur Veranschaulichung eines Zusammenhangs zwischen einem Lenkwinkel und einer Hundegangverstellung; und
- Fig. 11: ein Ablaufdiagramm eines Verfahrens zur Lenksteuerung einer knickgelenkten Baumaschine.

Gleiche beziehungsweise gleich wirkende Bauteile sind in den Figuren mit den gleichen Bezugszeichen bezeichnet. Sich wiederholende Bauteile sind nicht notwendigerweise in jeder Figur gesondert bezeichnet.

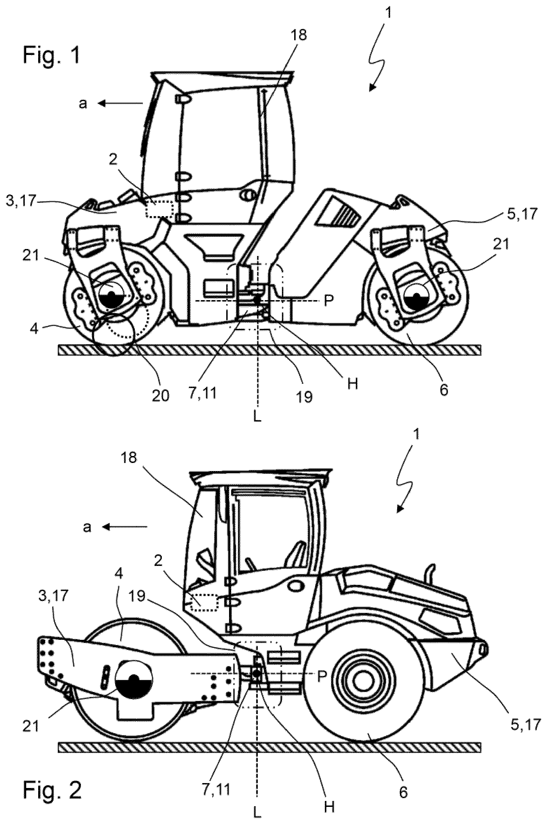

Die Figuren 1 und 2 zeigen beispielhaft knickgelenkte Baumaschinen 1 in einer Seitenansicht, konkret die Fig. 1 eine Tandemwalze und die Fig. 2 einen Walzenzug. Die beiden Baumaschinen 1 umfassen jeweils einen Gesamtmaschinenrahmen 17 mit einem Vorderwagen 3 und einem Hinterwagen 5, die über eine Knickpendelgelenkeinrichtung 7 miteinander verbunden sind. An dem Vorderwagen 3 ist eine erste Fahreinrichtung 4 (bei den in den Figuren dargestellten Ausführungsbeispielen jeweils eine einzige Walzbandage, die auch geteilt sein kann) und an dem Hinterwagen 5 eine zweite Fahreinrichtung 6 (in der Fig. 1 eine einzige weitere Walzbandage; in der Fig. 2 in Gummiradpaar) angeordnet. Mit a ist die Vorwärtsbewegungsrichtung der Baumaschine 1 bezeichnet. Die Fahreinrichtungen 4 und 6 können Schwingungserregungseinrichtungen 21, beispielsweise in Form von Unwuchterregern, aufweisen. Die Baumaschinen 1 können auch eine zwischen einer Bodenbearbeitungsposition und einer Stauposition verstellbare Bodenbearbeitungseinrichtung 20, insbesondere ein Kantenschneidgerät, aufweisen. Die Baumaschine 1 der Fig. 1 zeigt in diesem Zusammenhang eine Schneid- und/oder Andrückrolle in der abgesenkten und im Bodenkontakt stehenden Bodenbearbeitungsposition mit einer durchgezogenen Linie und in einer relativ dazu angehobenen und außer Bodenkontakt stehenden Stauposition in gepunkteter Linie.

Die Baumaschinen 1 umfassen ferner einen in den Figuren nicht näher dargestellten Antriebsmotor und sind entsprechend selbstfahrend ausgebildet.

Sie können ferner einen Fahrstand aufweisen, der beispielsweise in Form einer Fahrerkabine 18 ausgebildet sein kann. Innerhalb des Fahrstandes können ein oder mehrere Bedienelemente einer Betätigungseinrichtung vorhanden sein, über die ein innerhalb der Fahrstandes befindlicher Bediener Fahr- und Lenkvorgaben eingeben kann.

Die Baumaschinen 1 umfassen ferner eine Lenksteuereinheit 2. Diese erhält ein oder mehrere über beispielsweise eines oder mehrere der Bedienelemente von einem innerhalb des Fahrstandes befindlichen Bediener eingegebene Lenkvorgaben. Die Lenksteuereinheit 2 ist ferner mit einem in den Figuren 1 und 2 nicht dargestellten Lenkantrieb 10 und einem Verstellantrieb 12 über eine oder mehrere Steuerleitungen verbunden. Auf diese Weise kann die Lenksteuereinheit 2 unter anderem Lenkbewegungen des Vorderwagens 3 relativ zum Hinterwagen 5 um eine Lenkachse L mithilfe des Lenkantriebs 10 steuern. Die Knick-Pendelgelenkeinrichtung 7 erlaubt ferner eine Verstellung der Vorderwagens 3 relativ zum Hinterwagen 5 um eine quer zur Lenkachse L der Baumaschine 1, zumindest im Wesentlichen sich in Richtung der Vorwärtsrichtung a erstreckende, Pendelgelenkpendelachse bzw. Pendelachse P. Die Pendelachse P erstreckt sich vorliegend in Richtung der Längsachse der Baumaschine 1. Diese Pendelbewegung zwischen dem Vorderwagen 3 und dem Hinterwagen 5 kann zumindest innerhalb eines definierten Pendelbereiches frei und beispielsweise allein aufgrund der aktuellen Gegebenheiten der Aufstandsfläche des Bodenuntergrundes für die Fahreinrichtungen erfolgen. Ein Bereich dieser freien Pendelung kann beispielsweise ausgehend von einer Nulllage im Bereich von +/- 6° liegen. Es können ferner ein oder mehrere Anschläge von der Knick-Pendelgelenkeinrichtung 7 umfasst sein, die den Bereich freier Pendelung begrenzen.

Ferner kann die Lenksteuereinheit 2 eine translatorische Verstellung des Vorderwagens 3 relativ zum Hinterwagen 5, insbesondere quer zu den Achsen P und L, d.h. wenigstens teilweise aus der Bildebene der Figuren 1 und 2 heraus oder in diese hinein, durch eine Ansteuerung eines Verstellantriebs 12 einer Hundeganggelenkeinrichtung 11 im Rahmen eines Lenkvorgangs steuern. Die Hundeganggelenkeinrichtung kann funktional und räumlich eine gemeinsame Baueinheit mit der Knickpendelgelenkeinrichtung 7 oder auch beispielsweise funktional und räumlich in Reihe zur Knickpendelgelenkeinrichtung 7 ausgebildet sein. Wesentlich ist, dass die Verbindung des Vorderwagens 3 mit dem Hinterwagen 5 derart durch die Knickpendelgelenkeinrichtung 7 und die Hundeganggelenkeinrichtung 11 erfolgt, dass eine Verstellbewegung des Vorderrahmens 3 relativ zum Hinterwagen 5 um die Achsen P und L und wenigstens anteilig senkrecht dazu bzw. quer zur Vorwärtsrichtung a. Die Gesamtheit der Verbindungs- und Gelenkelemente, die den Vorderwagen3 mit dem Hinterwagen 5 verbinden, wird nachstehend auch als Verbindungsgelenkbereich 19 bezeichnet.

Rein vorsorglich sei an dieser Stelle ferner darauf hingewiesen, dass sich das nachstehend noch näher beschriebene Verfahren zur Lenksteuerung einer knickgelenkten Baumaschine 1 mit einer Lenksteuereinheit 2 auch auf autonom fahrende bzw. autonom fahrbare Baumaschinen 1 erstreckt. Diese müssen nicht notwendigerweise einen Fahrstand aufweisen. Die Lenkvorgaben können in einem solchen Fall durch eine Fahrsteuereinheit einer solchen Baumaschine 1 erzeugt und an die Lenksteuereinheit 2 übermittelt werden. Alternativ kann die Lenksteuereinheit 2 auch Teil der Fahrsteuereinheit einer solchen Baumaschine 1 sein.

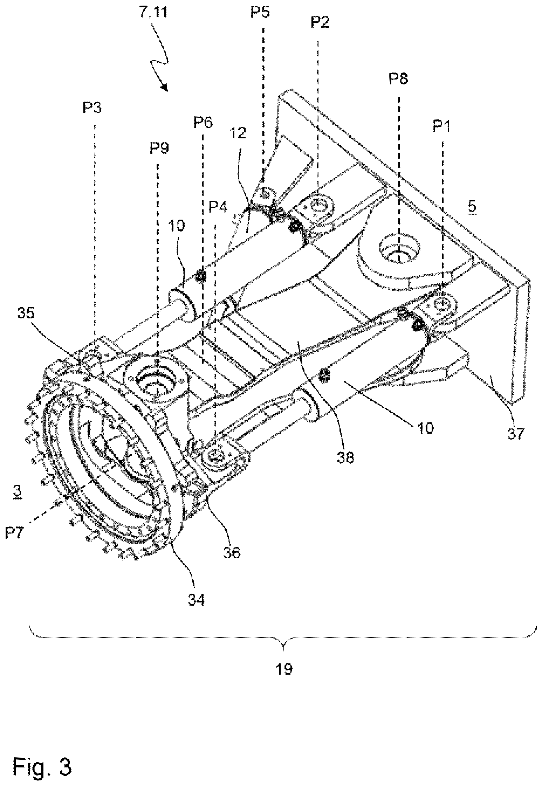

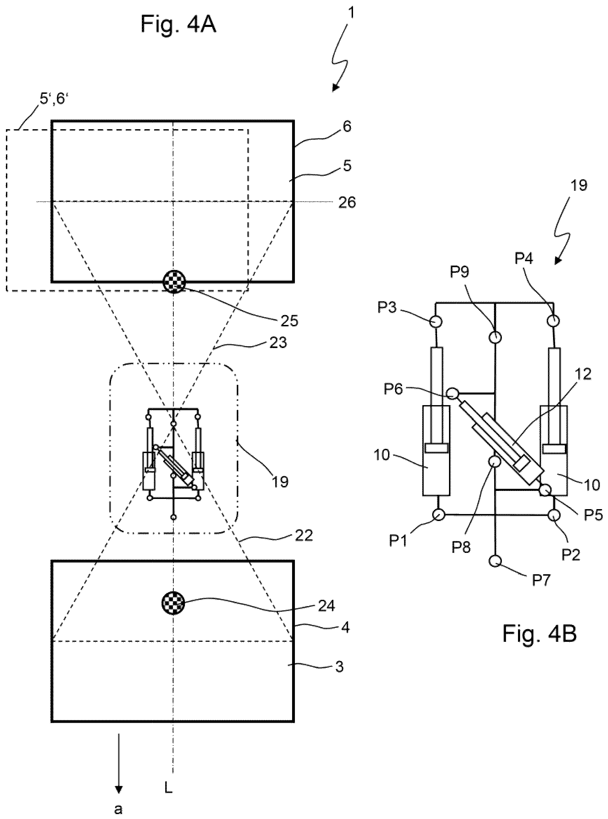

Fig. 3 zeigt in einer perspektivischen Schrägansicht eine beispielhafte Knickpendelgelenkeinrichtung 7 mit einer Hundeganggelenkeinrichtung 11. In der Fig 3 sind die funktional korrespondierenden Gelenkpunkte/Drehachsen P1 bis P9, der im vorliegenden Beispiel zwei Hydraulikzylinder umfassende Lenkantrieb 10 sowie der im vorliegenden Beispiel einen Hydraulikzylinder umfassende Verstellantrieb 12 gezeigt. Die Knickpendelgelenkeinrichtung 7 umfasst einen am Vorderwagen 3 angeflanschten Drehkranz 34, der um die Pendelgelenkpendelachse P7 drehbar gegenüber einem Lagerkranz 35 ist, an dem eine Gelenktragplatte 36 angeordnet ist, die im vorliegenden Beispiel Lager für die Gelenkpunkte P3, P4, P6 und P9 trägt. Gegenüberliegend ist eine Gelenktragplatte 37 am Hinterwagen 5 angeflanscht. Diese trägt die Gelenkpunkte P1, P2, P5 und P8. Zur tragkraftübertragenden Verbindung des Vorwagens 3 mit dem Hinterwagen 5 umfasst die Knickpendelgelenkeinrichtung 7 eine Verbindungstragachse 38, die an P8 und P9 angelenkt ist. Das in der Fig. 4 gezeigte Ausführungsbeispiel ist lediglich exemplarisch und kann mannigfaltig variiert werden. Insbesondere kann das über die Kränze 34 und 35 erhaltene Pendelgelenk auch auf Seiten des Hinterwagens 5 positioniert werden. Ferner sind offensichtlich auch Variationsmöglichkeiten hinsichtlich der konkreten Ausbildung der mechanisch wirkenden Komponenten möglich. Der jedoch für die Erfindung wesentliche funktione Wirkzusammenhang wird in den nachstehend Figuren näher erläutert.

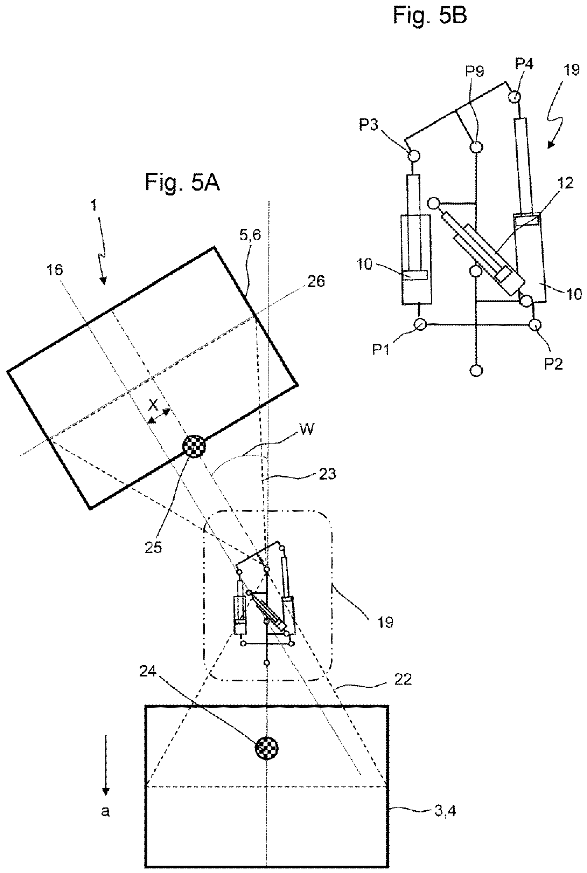

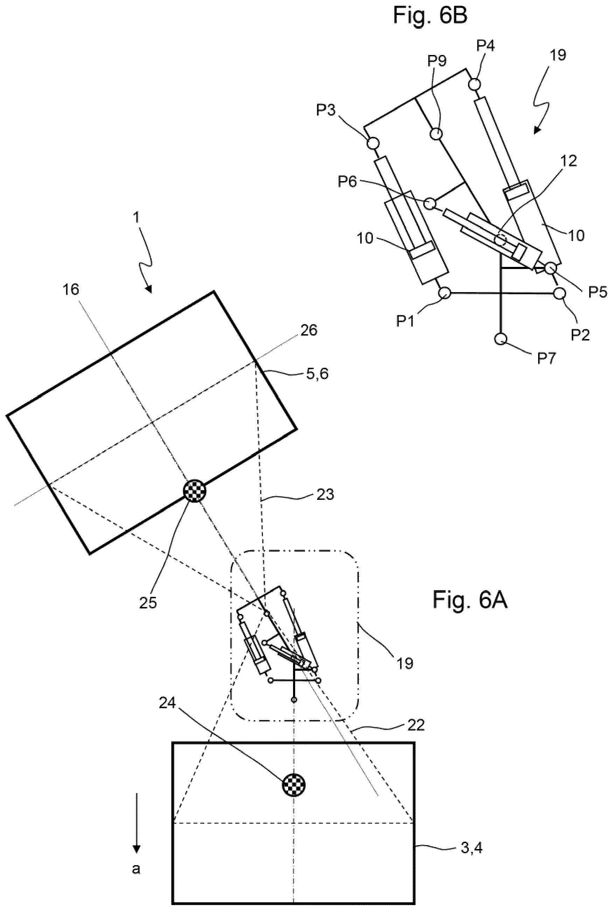

Die Figuren 4A, 5A und 6A veranschaulichen eine knickgelenkte Baumaschine 1 in stark schematisierter Form in einer Draufsicht in verschiedenen Relativlagen des Vorderwagens 3 mit der ersten Fahreinrichtung 4 relativ zum Hinterwagen 5 mit der zweiten Fahreinrichtung 6. Fig. 4A zeigt eine Geradeausfahrt mit einem Hundegangversatz von 0. Fig. 5A zeigt einen Einschlag in einer Rechtskurve (in Vorwärtsrichtung a gesehen) mit konventioneller Lenkung ausgehend von der Fig. 4A. Fig. 6A zeigt hierzu im Vergleich den Einschlag in die Rechtskurve erneut ausgehend von Fig. 4A bei im Vergleich zu Fig. 5A identischem Lenkwinkel, allerdings mit einer gleichzeitigen und nachstehend noch näher beschriebenen Kompensationsverstellung über die Hundeganggelenkeinrichtung. In den Figuren 4B, 5B und 6B ist dazu entsprechend jeweils der Verbindungsgelenkbereich 19, umfassend die Knickpendelgelenkeinrichtung 7 und die Hundeganggelenkeinrichtung 11, in einer Ausschnittsvergrößerung gezeigt, um das Bewegungsverhalten der einzelnen Gelenkeinrichtungen leichter nachvollziehbar zu machen.

Der Verbindungsgelenkbereich 19 umfasst den Lenkantrieb 10, bei dem es sich vorliegend beispielsweise um insgesamt zwei Hydraulikzylinder handelt, sowie den Verstellantrieb 12, bei dem es sich vorliegend beispielsweise ebenfalls um einen Hydraulikzylinder handelt. Die Antriebe 10 und 12 sind jeweils über Gelenkpunkte P an Gelenkteilen angelenkt, konkret der in Vorwärtsrichtung a gesehen rechte Hydraulikzylinder über die Gelenke P1 und P3, der in Vorwärtsrichtung a gesehen linke Hydraulikzylinder über die Gelenke P2 und P4 und der Verstellantrieb über die Gelenke P5 und P6. Ferner sind ein Pendelgelenk P7 sowie zwei Hundeganggelenke P8 und P9 vorhanden. Um das Pendelgelenk P7 kann der Vorderwagen 3 relativ zum Hinterwagen 5 um die Pendelachse P pendeln. Es versteht sich, dass die in den Figuren 4A ff. gezeigte Ausbildung des Verbindungsgelenkbereiches 19 lediglich beispielhaft und schematisch ist. Wesentlich ist der funktionale Umfang des Verbindungsgelenkbereiches 19 dahingehend, dass er eine Knick-Pendelgelenkeinrichtung 7 und eine Hundeganggelenkeinrichtung 11 aufweist. Die konkreten konstruktiven Details zum Erreichen dieser Einzelfunktionalitäten der jeweiligen Gelenkeinrichtungen 7 und 11 sowie deren Antrieb können offensichtlich variieren.

Fig. 4A veranschaulicht ferner ein Lastdreieck 22 des Vorderwagens 3 und ein Lastdreieck 23 des Hinterwagens 5 sowie einen Schwerpunkt 24 des Vorderwagens 3 und einen Schwerpunkt 25 des Hinterwagens 5. Die Schwerpunkte 23 und 24 sind die Massenschwerpunkte. Bei der in Fig. 4A gezeigten Stellung der einzelnen Elemente zueinander liegt eine Geradeausfahrt in Richtung a ohne bestehenden Hundeversatz, d.h. ohne Spurversatz der vorderen Fahreinrichtung 3 relativ zur hinteren Fahreinrichtung 5 vor. Ferner ist in der Fig. 4A beispielhaft die Position des Hinterwagens 5 bzw. der zweiten Fahreinrichtung 6 bei bestehendem alleinigen Hundeversatz mit 6' angegeben. Hinsichtlich ihrer Relativlage ist die Fahreinrichtung 6 in der Position 6' translatorisch gegenüber der Position 6 versetzt. Diese Hundegangverstellung wird allein durch den Verstellantrieb 12 angetrieben. Die Lenkantriebe 10 verändern ihre Stellposition dagegen nicht. Durch den Verstellantrieb 12 wird vorliegend letztendlich ein Art Parallelverschiebung des Hinterwagens 5 bzw. dessen zweiter Fahreinrichtung 6 relativ zum Vorderwagen 3 und dessen erster Fahreinrichtung 4 erreicht und dadurch ein Spurversatz herbeigeführt. Die Hundegangverstellbewegung verläuft innerhalb der stützkraftübertragenden Gelenkbereiche zwischen dem Vorderwagen 3 und dem Hinterwagen 5 insbesondere um die Gelenke P8 und P9. Die Lenkantriebe 10, die im Fall einer alleinigen Hundegangverstellung nicht ein- oder ausgefahren werden und damit ihre Stellposition nicht ändern, wirken in diesem Fall als Parallelogrammführungen. Die translatorische Verstellbewegung des Hinterwagens relativ zum Vorderwagen verläuft bei einer Projektion der Baumaschine 1 in eine virtuelle horizontale Projektionsebene (also beispielsweise der Bildebene der Figuren 4A ff.) in diesem Fall somit entlang eine Kurve. Es ist aber auch möglich, den Verbindungsgelenkbereich derart auszubilden, dass diese translatorische Verstellbewegung linear, insbesondere horizontal und quer zur Pendelachse P, verläuft, beispielsweise entlang einer Führungsschiene.

Von der in Fig. 4A gezeigten Position ausgehend zeigt die Fig. 5A hierzu im Vergleich eine reine Kurvenfahrt nach rechts mit dem Lenkwinkel W. Der Verstellantrieb 12 der Hundeganggelenkeinrichtung wurde dazu gegenüber der Fig. 4A nicht verstellt. Es erfolgte demnach keine Hundegangverstellung. Der Antrieb der Lenkbewegung erfolgte allein über den Lenkantrieb 10, konkret eine Verstellung der beiden Hydraulikzylinder des Lenkantriebs 10. Der Drehpunkt der Lenkbewegung liegt in P9, durch den in diesem Fall die Lenkachse L verläuft. Durch diese Lenkverstellung wird der Hinterwagen 5 im vorliegenden Ausführungsbeispiel mit seinem Schwerpunkt 25 in der Horizontalebene mit dem Abstand X aus der Verlängerung der Stützachse 16 des Verbindungsgelenkbereiches 19, im vorliegenden Fall konkret der Hundeganggelenkeinrichtung 11, verschoben, wodurch keine gleichmäßige Gewichtskraftverteilung mehr an der zweiten Fahreinrichtung 6 gegeben ist. Für den Fall beispielsweise, dass es sich bei der Fahreinrichtung 6 um eine trommelförmige Walzbandage handelt, steigen die im Kontaktbereich der Walzbandage mit dem Boden anliegenden Gewichtskräfte in der Darstellung der Fig. 5A von links nach rechts an. Dadurch können, insbesondere bei vergleichsweise weichem Bodenuntergrund, unerwünschte Unregelmäßigkeiten in die Bodenoberfläche eingebracht werden.

Ergänzend zu der in der Fig. 5A gezeigten Lenkverstellung ist es nun erfindungsgemäß vorgesehen, dass auch eine Verstellung der Hundeganggelenkeinrichtung 11 erfolgt, somit ein Spurversatz der Fahreinrichtungen 4 und 6 des Vorderwagens 3 und des Hinterwagens 5 durchgeführt werden. Dieser kann beispielsweise dem vorgenannten Abstand X entsprechen und genutzt werden, den Schwerpunkt 25 des Hinterwagens 5 auch in einer Kurvenfahrtsituation wieder der Verlängerung der Stützachse 16 des Verbindungsgelenkbereiches 19, konkret beispielweise der Hundeganggelenkeinrichtung 11 anzunähern oder, wie in Fig. 6A veranschaulicht, sogar auf die Verlängerung der Stützachse 16 in der Projektion in die Horizontalebene zu verschieben. In diesem Fall ist auch bei beispielsweise Kurvenfahrt der Baumaschine 1 eine gleichmäßige Gewichtskraftverteilung des Bodenkontaktbereiches der wenigstens einen zweiten Fahreinrichtung 6 des Hinterwagens 5 in Richtung entlang der Längsachse 26 bzw. der Rotationsachse der Fahreinrichtung 6 gegeben.

Das in der Fig. 6A gezeigte Ausmaß der Hundegangverstellung, vorliegend gegenüber der Fig. 5A um den Betrag X, muss nicht zwangsläufig derart gewählt werden, dass der Schwerpunkt 25 auf der Stützachse 16 liegt. Es kann auch vorgesehen sein, dass der Schwerpunkt 25 der Stützachse 16 nur angenähert wird oder alternativ im Sinne einer Überkompensation über die Stützachse 16 hinaus verschoben wird. Diese beiden Varianten können insbesondere dann vorteilhaft sein, wenn die Baumaschine 1 gleichzeitig eine Querneigung gegenüber dem Horizont bzw. gegenüber der Schwerkraftrichtung innehat. Dies kann beispielsweise bei Fahrten am Hang oder auch bei der Bearbeitung profilierter Bodenuntergründe, beispielsweise bei der Bearbeitung einer Fahrbahnoberfläche mit einem Dachprofil, der Fall sein. In diesen Fällen kann es beispielsweise dann von Vorteil sein, dass die zusammen mit einer Lenkverstellung erfolgende Hundegangverstellung zur Durchführung eines Lenkvorgangs derart erfolgt, dass der Schwerpunkt 25 gegenüber dem Schwerpunkt 24 hangaufwärts verlagert wird.

Je nach Ausgestaltung des Verbindungsgelenkbereiches 19 ist es auch möglich, dass bei einer Kurvenfahrt nicht der Schwerpunkt 25, sondern der Schwerpunkt 24 in der horizontalen Projektionsebene von der Stützachse des Verbindungsgelenkbereiches 19 und insbesondere von der Hundeganggelenkeinrichtung 11 verschoben wird. In diesem Fall können die vorstehend beschriebenen Mechanismen in analoger Weise auf eine Schwerpunktverschiebung des Schwerpunktes 24 angewendet werden.

Es ist ferner möglich, die vorstehend beschriebene Verstellung sowohl der Knickpendelgelenkeinrichtung 7 als auch der Hundeganggelenkeinrichtung 11 nacheinander und/oder versetzt zueinander durchzuführen. Zum Erhalt eine möglichst gleichmäßigen und homogenen Gesamtverstellbewegung ist es jedoch bevorzugt, wenn die Verstellung der Hundeganggelenkeinrichtung 11 und die Verstellung der Knickpendelgelenkeinrichtung 7 möglichst gleichzeitig erfolgen.

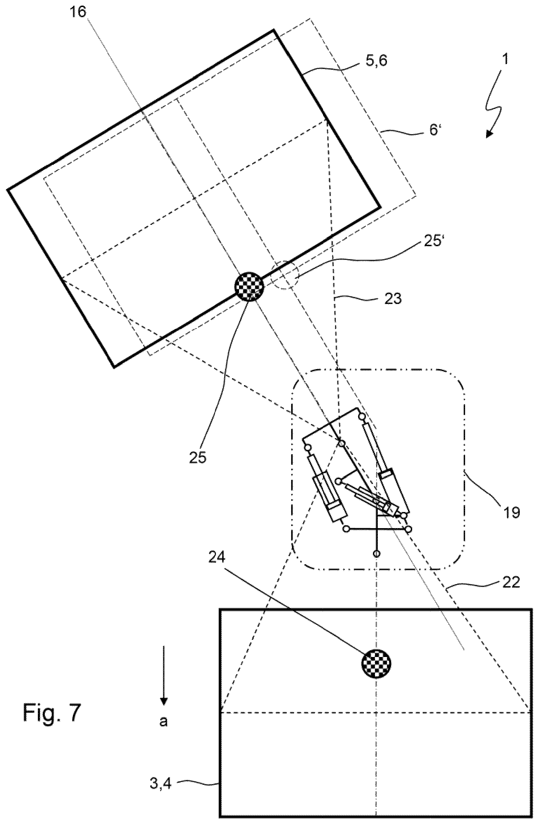

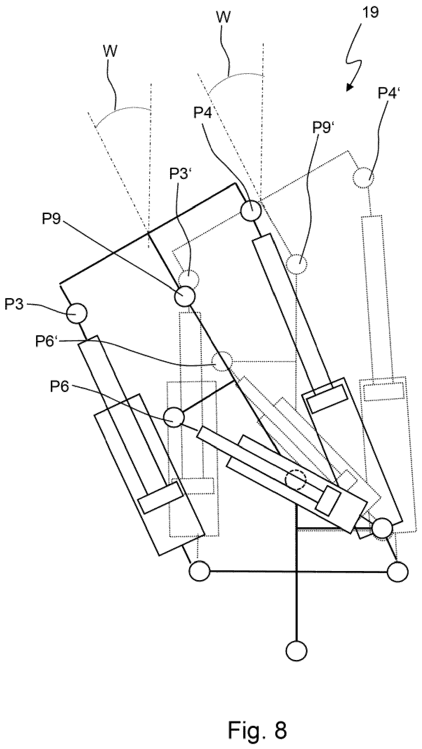

Die Unterschiede bezüglich einer möglichen Endlage der in den Figuren 4A bis 6B angegebenen beispielhaften Ausführungsform des Verbindungsgelenkbereiches 19 ausgehend von einer Geradeausfahrt zwischen einer reinen Lenkverstellung und einer mit einer Hundegangverstellung kombinierten Lenkverstellung sind ergänzend in den Überlagerungsansichten der Figuren 7 und 8 weiter veranschaulicht.

Fig. 7 zeigt dabei die Ansicht aus der Fig. 6A (Lenkverstellung und Hundegangverstellung) mit einer überlagerten zweiten Fahreinrichtung 6' und deren Schwerpunkt 25` aus der Fig. 5A (Lenkverstellung ohne Hundegangverstellung). Der Vergleich verdeutlicht, dass die zusätzliche Hundegangverstellung für sich keinen Einfluss auf den Lenkwinkel, wohl aber auf die Fahrspur der jeweiligen Fahreinrichtung 6 hat. Auch wenn somit die Lenkverstellung und die Hundegangverstellung zeitlich einander überlagert durchgeführt werden können, erfolgt durch die Hundegangverstellung an sich eine rein translatorisch Lageänderung der wenigstens einen zweiten bzw. hinteren Fahreinrichtung 6 des Hinterwagens 5 relativ zum Vorderwagen 3. Insbesondere verdeutlicht die Fig. 7 die mithilfe der ergänzenden Hundegangverstellung erreichte Verschiebung des Schwerpunktes 25 des Hinterwagens 5 relativ zum Vorderwagen 3 bzw. insbesondere auch relativ zu der Stützachse 16.

Fig. 8 ist eine Überlagerung der Figuren 5B (gepunktete Linien) und 6B (durchgezogene Linien) und damit der vergrößerten Verbindungsgelenkbereiche 19. Im konkreten Ausführungsbeispiel verlagern sich durch die Hundegangverstellung der Hundeganggelenkeinrichtung somit die Gelenkpunkte P3, P4, P6 und P9 (die Lage dieser Gelenkpunkte bei einer reinen Lenkverstellung sind in der Fig. 8 mit ' gekennzeichnet). Die jeweils erreichten Lenkwinkel W bleiben durch die zusätzliche Hundegangverstellung aber in beiden Fällen gleich.

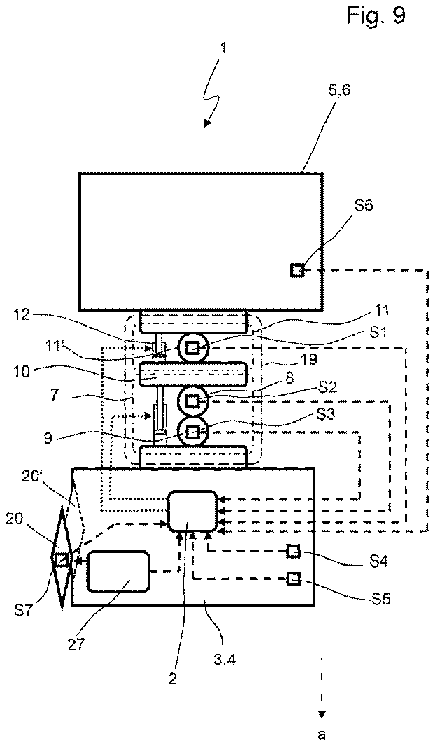

Fig. 9 veranschaulicht in einer alternativen Darstellung weitere Details insbesondere zum beispielhaften Aufbau eines Steuersystems zur Durchführung eines Verfahrens zur Lenksteuerung der knickgelenkten Baumaschine 1. Der Verbindungsgelenkbereich 19 ist aus Übersichtlichkeitsgründen stark schematisiert angegeben und umfasst funktional die Knickpendelgelenkeinrichtung 7 mit der Knickgelenkachse 8 und der Pendelgelenkachse 9 sowie die Hundeganggelenkeinrichtung mit einer Führungseinrichtung 11'. Ferner sind der Lenkantrieb 10 und der Verstellantrieb 12 umfasst.

Die Hundeganggelenkeinrichtung 11 umfasst einen Sensor S 1, der zur Ermittlung und/oder Überwachung des aktuellen Spurversatzes bzw. der aktuellen "Hundegangposition" ausgebildet ist. Dies kann beispielsweise eine Wegmess- und/oder Positionsmesseinrichtung des Verstellantriebs 12 sein.

Ferner ist ein Lenkwinkelsensor S2 vorhanden, der zur Ermittlung des aktuellen Lenkwinkels des Vorderwagens 3 relativ zum Hinterwagen 5 ausgebildet ist.

Das Sensorsystem der Baumaschine 1 umfasst weiter optional einen Pendelwinkelsensor S3, wobei dieser zur nachstehend noch näher beschriebenen Koordination der Lenkverstellung und der Hundegangverstellung zueinander nicht erforderlich aber nutzbar ist, beispielsweise zur Ermittlung einer Querneigung des Vorderwagens 3 relativ zum Hinterwagen 5 genutzt werden kann.

Es kann überdies ein Fahrgeschwindigkeitssensor S4 vorgesehen sein, der die aktuelle Fahrgeschwindigkeit der Baumaschine 1 ermittelt.

Ferner kann der Vorwagen 3 einen Querneigungssensor S5 und/oder der Hinterwagen 5 einen Querneigungssensor S6 aufweisen, die zur Ermittlung der aktuellen Querneigung des jeweiligen Wagenteils gegenüber dem Horizont bzw. gegenüber der Schwerkraft ausgebildet sind.

Schließlich kann die Baumaschine 1 einen oder mehrere Positionserfassungssensoren S7 aufweisen, mit denen eine oder mehrere Positionen eines oder mehrerer zwischen einer Bodenbearbeitungsposition und einer Stauposition verstellbaren Bodenbearbeitungseinrichtungen 20, beispielsweise einem in der Fig. 9 rautenförmig dargestellten Kantenschneidgerät, ermittelbar und/oder überwachbar ist. In der Fig. 9 befindet sich die Bodenbearbeitungseinrichtung 20 in der Bodenbearbeitungsposition und bei 20` in der Stauposition.

Die Sensoren S1 bis S7 sind zur direkten oder indirekten Ermittlung der vorstehend genannten Parameter ausgebildet und stehen, sofern vorhanden, mit der Lenksteuereinheit 2 in Signalübertragungsverbindung. Darüber hinaus kann die Baumaschine 1 eine Betätigungseinrichtung 27, beispielsweise einen Fahr- und Lenkhebel und/oder weitere Bedienelemente, aufweisen, über die der Bediener der Baumaschine 1 beispielsweise Lenk-, Fahrrichtungs- und/oder Fahrgeschwindigkeitsvorgaben manuell eingeben kann. Die Betätigungseinrichtung 27 sowie die Sensoren S1 bis S7 können in Signalübertragungsverbindung mit der Lenksteuereinheit stehen.

Basierend auf einem oder mehreren der von der Lenksteuereinheit 2 empfangenen Werte der Sensoren S1 bis S7 und/oder den von der Betätigungseinrichtung 27 empfangenen Steuervorgaben steuert die Lenksteuereinheit 2 den Lenkantrieb 10 und den Verstellantrieb 12. Dies erfolgt insbesondere derart, dass bei einer von der Betätigungseinrichtung 27 empfangenen reinen Lenkvorgabe die Lenksteuereinheit 2 ergänzend zur Ansteuerung des Lenkantriebs 10 zur Umsetzung der Lenkvorgabe hinsichtlich des vom Bediener gewünschten Lenkwinkels auch den Verstellantrieb 12 der Hundeganggelenkeinrichtung ansteuert und eine Verstellung an der Hundeganggelenkeinrichtung 11 durchführt. Die Hundegangverstellung erfolgt somit nicht auf Grundlage einer separat zur Lenkvorgabe durch den Bediener eingegebenen Hundegangverstellvorgabe, sondern in Reaktion ebenfalls auf die Lenkvorgabe.

In welchem Ausmaß und/oder wann diese auf eine Lenkvorgabe zurückgehende Hundegangverstellung erfolgt, kann variieren. Beispielsweise kann dies von der Lenksteuereinheit 2 aufgrund eines geeigneten Algorithmus und/oder von einem oder mehreren Kennfeldern erfolgen. Im einfachsten Fall wird jedem Lenkwinkel eine definierte Hundegangverstellung zugeordnet, beispielsweise in Bezug auf den Lenkwinkel in 1°-Schritten.

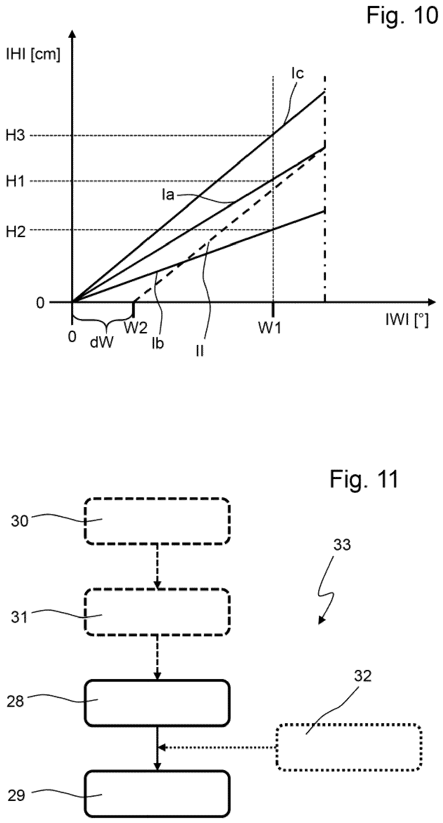

Die Fig. 10 veranschaulicht hierzu verschiedene Möglichkeiten, wie eine Hundegangverstellung H in Abhängigkeit von dem Lenkwinkel W variiert werden kann. Auf der Abszisse ist der Betrag des Lenkwinkels W angegeben, auf der Ordinate der Betrag der Hundegangverstellung H. Im Nullpunkt liegt ein Lenkwinkel von Null vor, was einer Geradeausfahrt entspricht. Im vorliegenden Ausführungsbeispiel ist zudem eine Hundegangverstellung von Null als Ausgangslage vorgesehen. D.h. der Vorderwagen 3 und der Hinterwagen 5 sind derart in Vorwärtsrichtung a hintereinander positioniert, dass der Abstand der außenliegenden Stirnseiten ihrer jeweiligen Fahreinrichtungen jeweils in der Horizontalebene quer zur Vorwärtsrichtung gleich ist. Sie sind mit anderen Worten quer zur Vorwärtsrichtung in der Horizontalebene somit mittig angeordnet. Bei sogenannten Tandemwalzen mit einer Walzbandage am Vorderwagen und einer Walzbandage am Hinterwagen fahren dann beide Walzbandagen, die üblicherweise dieselbe Walzbreite aufweisen, über ihre gesamte Breite hinweg in einer gemeinsamen Spur. Insgesamt wird diese Relativausrichtung des Vorderwagens 3 relativ zum Hinterwagen 5 auch als Nulllage bezeichnet.

Erfolgt eine Lenkbewegung ausgehend von dieser Nulllage in eine definierte Richtung, beispielsweise nach rechts, erfolgt auch die Hundegangverstellung in eine definierte Richtung, beispielsweise ebenfalls nach rechts. Entsprechend verhält es sich bei einer Lenkbewegung ausgehend von der Nulllage nach links, zu der dann eine Hundegangverstellung in die zur Lenkbewegung nach rechts entgegengesetzte Richtung erfolgt, d.h. beispielsweise nach links. Es kann mit anderen Worten vorgesehen sein, dass die in der Fig. 10 gezeigte Hundegangverstellung in Abhängigkeit von der Lenkverstellung stets in Richtung zum jeweils Kurveninneren erfolgt.

Die Steuergerade Ia sieht eine Korrelation des Lenkwinkels W mit der Hundegangsverstellung beispielsweise in der Art vor, dass der Schwerpunkt 25 des Hinterwagens 5 in einer virtuellen Projektionsebene auf der Stützachse 16 verbleibt. Dies kann beispielsweise im Vorfeld empirisch ermittelt werden. Ferner wird an dieser Stelle vorsorglich darauf hingewiesen, dass es sich hierbei nur um ein Ausführungsbespiel handelt. Je nach Auslegung des Verbindungsgelenkbereiches 19 kann auch eine Schwerpunktverlagerung des Vorderwagens 3 auf die Stützachse 16 mittels der beschriebenen Hundegangverstellung erfolgen. Wesentlich ist, dass der Lenkmodus gemäß Ia auf eine Aufrechterhaltung einer gleichmäßigen Gewichtskraftverteilung über die gesamte Aufstandsbreite der wenigstens einen Fahreinrichtungen und insbesondere der ausschließlich jeweils einen Fahreinrichtung des Vorderwagens 3 und des Hinterwagens 5 abzielt. Der Lenkmodus Ia kann daher beispielsweise auch als "gleichmäßige Lastverteilung" bezeichnet werden.

Anders verhält es sich beim Lenkmodus Ib, bei dem die Gerade eine niedrigere Steigung aufweist. Bei gleichem Lenkwinkel (beispielsweise W1) fällt das Ausmaß (bzw. der Betrag) der Hundegangverstellung bzw. des Spurversatzes mit H2 gegenüber H1 im Modus Ia geringer aus. Dies kann beispielsweise dann gewünscht sein, wenn das Kurvenfahrverhalten der Baumaschine 1 weniger beeinträchtigt werden soll, gleichzeitig aber auch zumindest teilweise die Vorteile der gleichzeitigen Hundegangverstellung erreicht werden sollen. Der Lenkmodus Ib kann daher beispielsweise auch als "leichter Kompensationsmodus" bezeichnet werden.

Alternativ dazu ist es im Lenkmodus Ic, der als "Überkompensationsmodus" bezeichnet werden kann, vorgesehen, dass eine gegenüber Ib sogar verstärkte Hundegangverstellung, bei W1 beispielsweise zu H3, erfolgt. Dies kann beispielsweise bei Hangfahren oder ähnlichen Szenarien von Vorteil sein.

Der Lenkmodus II unterscheidet sich von den vorhergehenden Lenkmodi Ia bis Ic dadurch, dass ausgehend von der Nulllage mit W2 ein Schwellenwert bzw. ein Verstellbereich dW des Lenkwinkels festgelegt ist, innerhalb dessen noch keine gleichzeitige Hundegangverstellung erfolgt. Erst bei Lenkwinkeln größer W2 leitet die Lenksteuereinheit 2 auch eine ergänzende Hundegangverstellung ein. Ergänzend oder alternativ kann es auch vorgesehen sein, dass die ergänzende Hundegangverstellung nur bis zu einem bestimmten Lenkwinkel W erfolgt, der kleiner ist als der maximale Lenkwinkel W. Dieser Lenkmodus kann beispielsweise als "Schwellenmodus" bezeichnet werden.

Weitere ergänzende oder alternative Korrelationen zwischen dem Lenkwinkel W und der Hundegangverstellung H können beispielsweise auch in Abhängigkeit von der Fahrgeschwindigkeit (beispielsweise in dem Sinn, dass bei gleichem Lenkwinkel das Ausmaß der Hundegangverstellung bei höheren Fahrgeschwindigkeiten größer ausfällt als bei geringeren Fahrgeschwindigkeiten) und/oder der Querneigung der Baumaschine (beispielsweise in dem Sinn, dass eine Hundegangverstellung bei Lenkwinkel- und/oder Querneigungsänderungen hangaufwärts erfolgt) vorgesehen sein und von der Lenksteuereinheit 2 gesteuert werden. Auch Mischformen sind möglich.

Es versteht sich, dass die vorstehend beschriebene vom Lenkwinkel abhängige Hundegangverstellung als Bedienfunktion der Baumaschine 1 aktivierbar und deaktivierbar sein kann. Hierzu kann es vorgesehen sein, dass die Betätigungseinrichtung 27 eine Eingabeeinrichtung aufweist, durch deren Betätigung dieser "Modus Lenkwinkel mit Hundegangverstellung" aktiviert und/oder deaktiviert werden kann. Es kann zudem eine Auswahleinrichtung vorgesehen sein, mit deren Hilfe der Bediener der Baumaschine 1 zwischen verschiedenen Untermodi des Kompensationsmodus wählen kann. Dies können beispielsweise Modi sein wie "Überkompensation", "gleichmäßige Lastverteilung", "Kippstabilisierung", "geschwindigkeitsabhängige Kompensation" etc.

Hinsichtlich der tatsächlichen Durchführung der beiden Einzelbewegungen "Lenkwinkelverstellung" und "Hundegangverstellung" relativ zueinander bestehen ebenfalls Variationsmöglichkeiten. Grundsätzlich ist es möglich, wie beispielsweise in den vorstehenden Ausführungsbeispielen gezeigt, dass die Hundegangverstellung gleichzeitig bzw. überlagert zur Lenkverstellung durchgeführt wird. Es ist jedoch auch möglich, dass die Lenkbewegung priorisiert gegenüber der Hundegangverstellung durchgeführt wird und die mit dem aktuellen Lenkwinkel W assoziierte Hundegangverstellung erst dann erfolgt, wenn der vorgegebene Lenkwinkel eingestellt worden ist. Auch Mischformen der Bewegungsüberlagerungen sind denkbar.

Fig. 11 schließlich veranschaulicht beispielhaft den Ablauf eines erfindungsgemäßen Verfahrens, insbesondere unter Rückgriff auf eines oder mehrere der in den vorhergehenden Figuren erläuterten und gezeigten Ausführungsbeispielen. Im Schritt 28 erfolgt ein durch die Lenksteuereinheit 2 gesteuertes Verstellen der Relativlage des Vorderwagens 3 relativ zum Hinterwagen 5 um die Knickgelenkachse 8 und damit eine Lenkverstellung aufgrund beispielsweise einer durch einen Bediener vorgegebenen Lenkvorgabe. Insbesondere gleichzeitig erfolgt ferner im Schritt 29 ein durch die Lenksteuereinheit 2 gesteuertes Verstellen der Relativlage des Vorderwagens 3 relativ zum Hinterwagen 5 über die Hundeganggelenkeinrichtung 11. Den Schritten 28 und 29 vorgelagert sein kann ein Aktivieren eines solchen Lenkmodus gemäß Schritt 30 sowie ein Ermitteln der aktuellen Hundegang- und Lenkposition im Schritt 31, beispielsweise mithilfe der Sensoren S1und S2.

Das Verfahren kann ferner ein Überwachen der Position einer zwischen einer Bodenbearbeitungsposition und einer Stauposition verstellbaren Bodenbearbeitungseinrichtung 20 umfassen und in einem Schritt 32 ein positionsabhängiges Freigeben oder Sperren der zur Lenkverstellung ergänzenden Hundegangverstellung im Schritt 29 vorsehen, insbesondere derart, dass der Schritt 29 nur dann im Schritt 32 freigegeben wird, wenn sich die Bodenbearbeitungseinrichtung in der Stauposition oder zumindest nicht im Bodenkontakt oder gar Bodeneingriff befindet. Dies kann beispielsweise mithilfe eines oder mehrerer der Sensoren S7 erfolgen.

## Patentansprüche

1. Verfahren (33) zur Lenksteuerung einer knickgelenkten Baumaschine (1), insbesondere einer selbstfahrende Bodenverdichtungsmaschine, insbesondere Walzenzug oder Tandemwalze, mithilfe einer Lenksteuereinheit (2),
die Baumaschine (1) umfassend
- einen Vorderwagen (3) mit einer ersten Fahreinrichtung (4),
- einen Hinterwagen (5) mit einer zweiten Fahreinrichtung (6),
- eine den Vorderwagen (3) mit dem Hinterwagen (5) verbindende Knick-Pendelgelenkeinrichtung (7) mit einer Knickgelenklenkachse (8) und einer Pendelgelenkpendelachse (9), wobei die Knick-Pendelgelenkeinrichtung (7) einen von der Lenksteuereinheit (2) gesteuerten Lenkantrieb (10) zum Antrieb einer Lenkbewegung um die Knickgelenkachse (8) aufweist,
- eine Hundeganggelenkeinrichtung (11) zur translatorischen Verstellung des Vorderwagens (3) relativ zum Hinterwagen (5), wobei die Hundegelenkeinrichtung (11) einen von der Lenksteuereinheit (2) gesteuerten Verstellantrieb (12) zum Antrieb einer translatorischen Verstellbewegung des Vorderwagens (3) relativ zum Hinterwagen (5) aufweist,
wobei ein durch die Lenksteuereinheit (2) gesteuerter Lenkvorgang die Schritte
a) Verstellen (28) der Relativlage des Vorderwagens (3) relativ zum Hinterwagen (5) um die Knickgelenkachse (8) und
b) Verstellen (29) der Relativlage des Vorderwagens (3) relativ zum Hinterwagen (5) über die Hundeganggelenkeinrichtung (11) umfasst.

2. Verfahren (33) gemäß Anspruch 1,
**dadurch gekennzeichnet,**
**dass** die Schritte a) und b) während eines Lenkvorgangs wenigstens teilweise zueinander überlagert erfolgen.

3. Verfahren (33) gemäß einem der vorhergehenden Ansprüche,
**dadurch gekennzeichnet,**
**dass** der Schritt b) ergänzend zum Schritt a) erst beim Überschreiten eines definierten Lenkwinkels (dW) erfolgt

4. Verfahren (33) gemäß einem der vorhergehenden Ansprüche,
**dadurch gekennzeichnet,**
**dass** die Verstellung im Schritt b) in Richtung zum Kurveninneren eines im Schritt a) erfolgten Lenkeinschlags erfolgt.

5. Verfahren (33) gemäß einem der vorhergehenden Ansprüche,
**dadurch gekennzeichnet,**
**dass** das Ausmaß der Verstellung im Schritt b) unter Berücksichtigung einer Schwerpunktlage des Vorderwagens (3) und/oder des Hinterwagens (5) erfolgt.

6. Verfahren (33) gemäß einem der vorhergehenden Ansprüche,
**dadurch gekennzeichnet,**
**dass** der Schritt b) derart durchgeführt wird, dass bei einer Projektion der knickgelenkten Baumaschine (1) in eine horizontale Bezugsebene der Schwerpunkt (14) des Vorderwagens (3) oder des Hinterwagens (5) in dieser Bezugsebene an eine Stützachse (16) der Knick-Pendelgelenkeinrichtung (7) angenähert oder auf diese verschoben wird.

7. Verfahren (33) gemäß einem der vorhergehenden Ansprüche,
**dadurch gekennzeichnet,**
**dass** ein Erfassen einer aktuellen Querneigung der Baumaschine (1), insbesondere des Vorderwagens (3) und/oder des Hinterwagens (5), erfolgt, und dass der Schritt b), insbesondere das Ausmaß der Verstellung der Relativlage des Vorderwagens (3) relativ zum Hinterwagen (5) über die Hundeganggelenkeinrichtung (11), in Abhängigkeit von der aktuellen Querneigung ergänzend zum Schritt a) erfolgt.

8. Verfahren (33) gemäß einem der vorhergehenden Ansprüche,
**dadurch gekennzeichnet,**
**dass** ein Erfassen einer aktuellen Fahrgeschwindigkeit der Baumaschine (1) erfolgt, und dass der Schritt b), insbesondere das Ausmaß der Verstellung der Relativlage des Vorderwagens (3) relativ zum Hinterwagen (5) über die Hundeganggelenkeinrichtung (11), in Abhängigkeit von der aktuellen Fahrgeschwindigkeit ergänzend zum Schritt a) erfolgt.

9. Verfahren (33) gemäß einem der vorhergehenden Ansprüche,
**dadurch gekennzeichnet,**
**dass** die selbstfahrend Baumaschine (1) eine zwischen einer Bodenbearbeitungsposition und einer Stauposition verstellbare Bodenbearbeitungseinrichtung (20), insbesondere ein Kantenschneidgerät, umfasst, und dass die Lenksteuereinheit (2) ergänzend zum Schritt a) den Schritt b) abhängig von der aktuellen Position des Bodenbearbeitungsgerätes (20) aktiviert und/oder deaktiviert.

10. Knickgelenkte Baumaschine (1), insbesondere selbstfahrende Bodenverdichtungsmaschine, umfassend
- einen Vorderwagen (3) mit einer ersten Fahreinrichtung (4),
- einen Hinterwagen (5) mit einer zweiten Fahreinrichtung (6),
- eine den Vorderwagen (3) mit dem Hinterwagen (5) verbindende Knick-Pendelgelenkeinrichtung (7) mit einer Knickgelenklenkachse (8) und einer Pendelgelenkachse (9), wobei die Knick-Pendelgelenkeinrichtung (7) einen Lenkantrieb (10) zum Antrieb einer Lenkbewegung um die Knickgelenkachse (8) aufweist,
- eine Hundeganggelenkeinrichtung (11) zur translatorischen Verstellung des Vorderwagens (3) relativ zum Hinterwagen (5), wobei die Hundegelenkeinrichtung (11) einen Verstellantrieb (12) zum Antrieb einer translatorischen Verstellbewegung des Vorderwagens (3) relativ zum Hinterwagen (5) aufweist,
und mit einer eine Lenksteuereinheit (2),
**dadurch gekennzeichnet,**
**dass** die Lenksteuereinheit (2) zur Durchführung des Verfahrens (33) gemäß einem der Ansprüche 1 bis 9 ausgebildet ist.

11. Knickgelenkte Baumaschine (1) gemäß Anspruch 10,
**dadurch gekennzeichnet,**
**dass** sie aufweist
- einen Lenkwinkelsensor (S2) zur Erfassung einer Lenkwinkelvorgabe und/oder eines Ist-Lenkwinkels zwischen dem Vorderwagen (3) und dem Hinterwagen (5),
- einen Querneigungssensor (S5, S6) zur Erfassung einer Querneigung des Vorderwagens (3) und/oder des Hinterwagens (5) und/oder einen Fahrgeschwindigkeitssensor (S4) zur Erfassung einer Fahrgeschwindigkeitsvorgabe und/oder einer Ist-Fahrgeschwindigkeit,
und **dass** die Lenksteuereinheit (2) in Signalübertragungsverbindung mit wenigstens einem dieser Sensoren (S2, S5, S6) steht und derart ausgebildet ist, dass der Schritt b) in Abhängigkeit von wenigstens einer der von dem wenigstens einen Sensor (S2, S5, S6) übermittelten Messwerte erfolgt.
